# FASCICULE DE BREVET EUROPEEN

(11) **EP 4 187 874 B1**
(45) Date de publication et mention de la délivrance du brevet: **23.04.2025**
(21) Numéro de dépôt: 22209349.4
(22) Date de dépôt: 24.11.2022
(51) Int. Cl.: H04L 61/5014, H04L 61/5084, H04L 69/40

(54) **PROCEDE DE CONFIGURATION D'UN RESEAU DE COMMUNICATION ET NOEUD IMPLEMENTANT LEDIT PROCEDE DE CONFIGURATION**
VERFAHREN ZUR KONFIGURATION EINES KOMMUNIKATIONSNETZES UND KNOTEN ZUR DURCHFÜHRUNG DES VERFAHRENS
METHOD FOR CONFIGURING A COMMUNICATION NETWORK AND NODE IMPLEMENTING SAID CONFIGURATION METHOD

(30) Priorité: 26.11.2021 FR 2112595
(43) Date de publication de la demande: 31.05.2023
(73) Titulaire: Sagemcom Broadband SAS, 92270 Bois-Colombes (FR)
(72) Inventeur: ALARCON, Laurent, 92500 RUEIL MALMAISON (FR); FAYE, Stanislas, 92500 REUIL MALMAISON (FR); LALAM, Massinissa, 92500 RUEIL MALMAISON (FR)
(74) Mandataire: Cabinet Le Guen Maillet

(56) Documents cités:
- US-A1- 2016 248 729
- HINDEN R ET AL: "Virtual Router Redundancy Protocol (VRRP); rfc3768.txt", VIRTUAL ROUTER REDUNDANCY PROTOCOL (VRRP)?; RFC3768.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 April 2004 (2004-04-01), XP015009548
- LI JUNIPER NETWORKS B COLE JUNIPER NETWORKS P MORTON CISCO SYSTEMS D LI CISCO SYSTEMS T: "Cisco Hot Standby Router Protocol (HSRP); rfc2281.txt", CISCO HOT STANDBY ROUTER PROTOCOL (HSRP)?; RFC2281.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1998 (1998-03-01), XP015008065

## Description

### DOMAINE TECHNIQUE

Au moins un mode de réalisation concerne un procédé de configuration d'un réseau de communication comportant une passerelle adaptée à interconnecter le réseau de communication à un réseau de communication étendu et reliée à une pluralité de nœuds implémentant une fonctionnalité de point d'accès, lesdits nœuds étant coordonnés de manière centralisée par un nœud maître courant sélectionné parmi la pluralité de nœuds. Au moins un autre mode de réalisation concerne un nœud implémentant ledit procédé de configuration.

### ETAT DE LA TECHNIQUE ANTERIEURE

Afin d'augmenter la portée des réseaux locaux LAN (« Local Area Network » en anglais), il est connu de coordonner plusieurs points d'accès AP (« Access Point » en anglais). Ces différents points d'accès AP sont intégrés à des nœuds de communication interconnectés, appelés simplement ci-après nœuds. Tous ces points d'accès AP mettent à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé clef de sécurité). Ainsi, l'extension de couverture de communication sans-fil est transparente pour les dispositifs connectés au réseau local sans-fil WLAN.

Le réseau local est ainsi typiquement relié à l'Internet au travers d'une passerelle GW d'accès à l'Internet, par exemple grâce à un cordon Ethernet assurant le raccordement d'un nœud principal du réseau local sans-fil avec la passerelle GW. Les nœuds du réseau servent alors de relais entre la passerelle et chaque dispositif connecté de manière filaire ou sans-fil au réseau local LAN, et sert aussi de relais entre ces différents dispositifs connectés au réseau local LAN pour leur permettre de communiquer entre eux.

Les nœuds du réseau local sont connectés les uns aux autres par une structure en forme d'arbre, un nœud pouvant alors servir de relais entre deux autres nœuds. Les nœuds sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local WLAN lui-même. Les nœuds du réseau local communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

Les nœuds du réseau sont typiquement coordonnés de manière centralisée par un nœud maître choisi parmi lesdits nœuds du réseau. Le nœud maître peut être désigné par configuration figée ou dynamiquement par élection, e.g. en utilisant des informations telles qu'un numéro de série, un identifiant de version du logiciel installé dans le nœud, ou en s'appuyant sur des options DHCP (acronyme anglais de « Dynamic Host Configuration Protocol »). Tous les nœuds du réseau ont ainsi connaissance du nœud maître, et sont capables de l'identifier grâce à son adresse MAC (acronyme anglais de « Medium Access Control »).

Dans le cas des réseaux locaux LAN chez les abonnés d'un fournisseur d'accès à l'Internet, le nœud maître est préférentiellement le nœud du réseau qui est au plus près de la passerelle GW. Cela permet d'y héberger spécifiquement des services réseau, comme par exemple un service DNS (acronyme anglais de « Domain Name System »), un service de contrôle parental ou encore un service de routage, puisque le nœud maître a alors une position stratégique de concentration de flux de données en étant le nœud ou un des nœuds du réseau local au plus près de la passerelle GW. Pour accéder aux différents services, tous les nœuds connectés au réseau local sont classiquement configurés avec l'adresse IP du nœud maître. Or, lors d'un changement de nœud maître, e.g. suite à une perte de connexion entre le nœud maître et la passerelle, les autres nœuds perdent également leur connexion au réseau local et plus généralement l'accès aux services réseau. En effet, la configuration des nœuds pour l'accès aux différents services réseau avec l'adresse IP du nœud maître précédent n'est plus valide suite au changement de nœud maître. Il s'ensuit une interruption desdits services réseau qui ne sont plus accessibles aux utilisateurs du réseau local.

Le document US 2016/248729 A1 décrit une méthode permettant de connecter des terminaux à un réseau de communication par le biais d'une passerelle mobile.

Le document HINDEN R et al., « virtual Router Redundancy Protocol, rfc3768.txt », IETF, ISOC, spécifie un protocole d'élection qui attribue dynamiquement la responsabilité d'un routeur virtuel dans un réseau local.

Il est souhaitable de pallier ces différents inconvénients de l'état de la technique. Il est notamment souhaitable de proposer un procédé de configuration d'un réseau de communication qui permette une continuité de l'accès aux services réseau notamment en cas de changement de nœud maître.

### EXPOSE DE L'INVENTION

Au moins un mode de réalisation concerne un procédé de configuration d'un réseau de communication comportant une passerelle adaptée à interconnecter ledit réseau de communication à un réseau de communication étendu, ladite passerelle étant reliée à une pluralité de nœuds implémentant une fonctionnalité de point d'accès à un réseau de communication local sans fil, ladite pluralité de nœuds comprenant un nœud maître courant sélectionné parmi ladite pluralité de nœuds, ledit nœud maître courant étant configuré pour définir la configuration du réseau de communication. Le procédé comprend les étapes suivantes mises en œuvre par ledit nœud maître courant :
- obtenir une première adresse IP associée à une adresse MAC de base dudit nœud maître courant,
- obtenir une adresse MAC virtuelle et une deuxième adresse IP associée à ladite adresse MAC virtuelle, ladite deuxième adresse IP étant réservée à une configuration de services réseau et étant différente et décorrélée de ladite première adresse IP ; et
- configurer une interface réseau virtuelle configurée pour héberger lesdits services réseau avec ladite deuxième adresse IP associée à ladite adresse MAC virtuelle.

Le procédé est caractérisé en ce que l'étape d'obtenir une adresse MAC virtuelle et une deuxième adresse IP associée à ladite adresse MAC virtuelle comprend :
- lorsque le nœud maître courant est un nœud maître nouvellement élu et lorsqu'en outre l'adresse MAC virtuelle et la deuxième adresse IP associée sont déjà allouées sur le réseau de communication :
   ∘ obtenir ladite adresse MAC virtuelle et la deuxième adresse IP associée à ladite adresse MAC virtuelle depuis ledit nœud maître courant, si lesdites adresse MAC virtuelle et deuxième adresse IP associée sont déjà à disposition dudit nœud maître courant, ou, recevoir ladite adresse MAC virtuelle et la deuxième adresse IP associée depuis un autre nœud du réseau de communication sinon.

Grâce à l'utilisation d'une adresse MAC virtuelle et d'une adresse IP réservée à une configuration des services réseau, le procédé de configuration permet avantageusement aux nœuds du réseau de continuer à bénéficier de l'accès aux services réseau, notamment suite à un changement de nœud maître.

Dans un mode particulier de réalisation, obtenir une adresse MAC virtuelle et une deuxième adresse IP associée à ladite adresse MAC virtuelle comprend :
- lorsque le nœud maître courant est un nœud maître nouvellement élu et lorsqu'en outre l'adresse MAC virtuelle et la deuxième adresse IP associée ne sont pas allouées sur le réseau de communication :
   ∘ générer une adresse MAC virtuelle à partir de ladite adresse MAC de base dudit nœud maître courant ;
   ∘ configurer l'interface réseau virtuelle avec ladite adresse MAC virtuelle ;
   ∘ démarrer un client DHCP relié à l'interface réseau virtuelle ;
   ∘ obtenir, par le client DHCP, une adresse IP auprès d'un serveur DHCP, ladite adresse IP obtenue étant la deuxième adresse IP réservée à la configuration des services réseau.

Dans un mode particulier de réalisation, la valeur de ladite adresse MAC virtuelle est égale à la valeur de ladite adresse MAC de base dudit nœud maître courant incrémenté de v, v étant un entier positif.

Dans un mode particulier de réalisation, lorsque l'adresse MAC virtuelle et la deuxième adresse IP associée sont reçues depuis un autre nœud du réseau de communication, la deuxième adresse IP reçue depuis l'autre nœud du réseau de communication a été obtenue auprès d'un serveur DHCP par un autre nœud maître différent dudit nœud maître courant à partir d'une adresse MAC virtuelle, et ladite adresse MAC virtuelle reçue depuis ledit autre nœud du réseau de communication a été générée à partir d'une adresse MAC de base dudit autre nœud maître, et dans lequel configurer une interface réseau virtuelle avec la deuxième adresse IP associée à ladite adresse MAC virtuelle comprend :
- configurer ladite interface réseau virtuelle avec ladite adresse MAC virtuelle et avec la deuxième adresse IP associée à ladite adresse MAC virtuelle et
- démarrer un client DHCP relié à l'interface réseau virtuelle.

Dans un mode particulier de réalisation, configurer une interface réseau virtuelle avec la deuxième adresse IP associée comprend créer une table de routage secondaire et utiliser ladite table de routage secondaire pour rediriger le trafic des services réseau reçu.

Au moins un mode de réalisation concerne nœud maître d'un réseau de communication comportant une passerelle adaptée à interconnecter ledit réseau de communication à un réseau de communication étendu, ladite passerelle étant reliée à une pluralité de nœuds implémentant une fonctionnalité de point d'accès à un réseau de communication local sans fil, ladite pluralité de nœuds comprenant un nœud maître courant sélectionné parmi ladite pluralité de nœuds, ledit nœud maître courant étant configuré pour définir la configuration du réseau de communication , ledit nœud maître comprenant de la circuiterie électronique configurée pour :
- obtenir une première adresse IP associée à une adresse MAC de base dudit nœud maître courant,
- obtenir une adresse MAC virtuelle et une deuxième adresse IP associée à ladite adresse MAC virtuelle, ladite deuxième adresse IP étant réservée à une configuration de services réseau et étant différente et décorrélée de ladite première adresse IP ; et
- configurer une interface réseau virtuelle configurée pour héberger lesdits services réseau avec a deuxième adresse IP associée à ladite adresse MAC virtuelle ;
et l'étape d'obtenir ladite adresse MAC virtuelle et la deuxième adresse IP associée à ladite adresse MAC virtuelle comprenant :
- lorsque le nœud maître courant est un nœud maître nouvellement élu et lorsqu'en outre l'adresse MAC virtuelle et la deuxième adresse IP associée sont déjà allouées sur le réseau de communication :
   ∘ obtenir ladite adresse MAC virtuelle et la deuxième adresse IP associée à ladite adresse MAC virtuelle courant depuis le nœud maître courant (S202), si lesdites adresse MAC virtuelle et deuxième adresse IP associée sont déjà à disposition du nœud maître courant, ou
   ∘ recevoir ladite adresse MAC virtuelle et la deuxième adresse IP associée à ladite adresse MAC virtuelle depuis un autre nœud du réseau de communication sinon (S208) .

Le nœud maître est configuré pour mettre en œuvre le procédé selon l'un quelconque des modes de réalisation précédents

Au moins un mode de réalisation concerne un produit programme d'ordinateur qui comprend des instructions pour mettre en œuvre le procédé de configuration selon l'un quelconque des modes de réalisation précédents lorsque ledit programme est exécuté par un processeur.

Au moins un mode de réalisation concerne un support de stockage qui stocke un programme d'ordinateur comprenant des instructions pour mettre en œuvre le procédé de configuration selon l'un quelconque mode de réalisation précédent, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication dans lequel la présente invention peut être implémentée ;
[Fig. 2] illustre schématiquement un exemple d'architecture matérielle d'un nœud du réseau de communication selon un mode particulier de réalisation ;
[Fig. 3] illustre schématiquement un procédé de configuration d'un réseau de communication selon un mode particulier de réalisation ; et
[Fig. 4] illustre schématiquement un procédé de configuration d'un réseau de communication selon un mode de réalisation particulier.

### EXPOSE DETAILLE DE MODES DE REALISATION

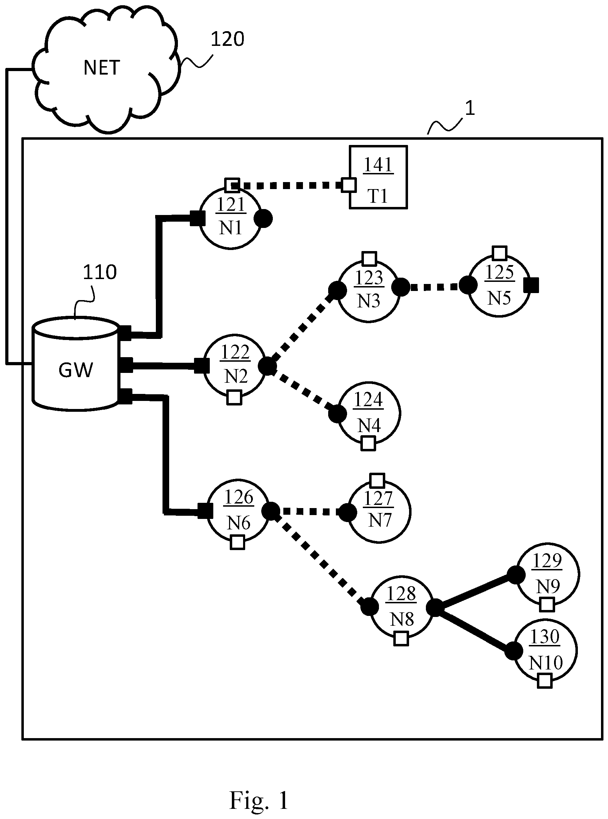

La Fig. 1 illustre schématiquement un réseau de communication 1 dans lequel la présente invention peut être implémentée. Le réseau de communication 1 comprend un ensemble de nœuds N1 121, N2 122, N3 123, N4 124, N5 125, N6 126, N7 127, N8 128, N9 129 et N10 130 interconnectés et reliés à un réseau de communication étendu 120, e.g. à l'Internet, au travers d'une passerelle GW 110. Chaque nœud implémente une fonctionnalité de point d'accès AP d'un réseau local sans-fil WLAN (« Wireless Local Area Network » en anglais). Les nœuds de ladite pluralité de nœuds mettent tous à disposition un même réseau local sans-fil WLAN (même nom...). Dans le cadre de la technologie Wi-Fi (marque déposée), tous ces points d'accès AP utilisent ainsi un même identifiant SSID et un même mot de passe, pour former un réseau sans-fil maillé ou « mesh network ». La zone de couverture du réseau local sans-fil WLAN ainsi constitué autour du réseau de communication 1, est alors étendue de manière transparente pour chaque terminal, ou station, qui s'y connecte.

Les nœuds N1 121 à N10 130 sont connectés les uns aux autres grâce à une structure en forme d'arbre, un nœud pouvant alors servir de relais entre deux autres nœuds. Dans un exemple, lorsqu'une distinction est faite entre une fonctionnalité point d'accès « backhaul » (pour l'interconnexion des nœuds) et une fonctionnalité point d'accès « fronthaul » (pour la connexion des équipements ou stations au LAN), les nœuds N1 121 à N10 130 sont interconnectés grâce à des liaisons filaires, par exemple de type Ethernet, ou à des liaisons sans-fil, par exemple une liaison Wi-Fi (marque déposée) utilisant un identifiant SSID différent dudit réseau local sans-fil WLAN lui-même. Dans un autre exemple, lorsque des nœuds supportent à la fois la fonctionnalité « backhaul » et « fronthaul », l'interconnexion des nœuds et la connexion des stations peut utiliser un seul et même SSID. Les nœuds N1 121 à N10 130 du réseau de communication 1 communiquent ainsi entre eux grâce à des liaisons logiques, par exemple des communications IP ou des tunnels chiffrés ou des communications selon un protocole de communication propriétaire.

De manière illustrative, sur la Fig. 1, les nœuds N1 121, N2 122 et N6 126 sont connectés directement à une passerelle GW 110 . Les branches du réseau de communication 1 connectées à ces nœuds N1 121, N2 122 et N6 126 ont une topologie en étoile ou en série (« daisy chain » en anglais). La Fig. 1 montre également que le nœud N2 122 est connecté au nœud N3 123 et au nœud N4 124 grâce à une liaison sans-fil (distincte du réseau local sans-fil WLAN lui-même) représentée par un trait en pointillé, et les nœuds N9 129 et N10 130 sont connectés au nœud N8 128 grâce à une liaison filaire représentée par un trait plein. Le nœud N5 125 est connecté au nœud N3 123 grâce à une liaison sans-fil. Le nœud N6 126 est connecté au nœud N7 127 et au nœud N8 128 grâce à une liaison sans-fil.

Le réseau de communication 1 permet ainsi d'interconnecter une passerelle GW 110 à un ou plusieurs terminaux, e.g. le terminal T1 141. Le terminal T1 141 est par exemple un téléphone intelligent (« smartphone » en anglais) connecté par une liaison sans-fil, un téléviseur connecté par une liaison filaire, une tablette connectée par une liaison sans-fil, une unité de stockage en réseau NAS (« Network Attached Storage » en anglais) connectée par une liaison sans-fil.

La configuration du réseau de communication 1 est définie au travers d'un nœud maître sélectionné parmi la pluralité de nœuds. Dans un exemple de réalisation particulier, le nœud maître est sélectionné parmi les nœuds qui sont directement reliés à la passerelle GW 110, à savoir l'un des nœuds N1 121, N2 122 ou N6 126 dans le contexte de la Fig. 1. Les nœuds qui ne sont pas maîtres sont dits nœuds esclaves.

Tous les nœuds du réseau de communication 1 ont connaissance de tous les autres nœuds du réseau de communication 1 et sont capables de les identifier grâce à leurs adresses MAC de base, i.e. l'adresse MAC attribuée dès sa fabrication en usine, et/ou leurs adresses réseau (e.g., adresses IP). En effet, tous les nœuds du réseau de communication 1 ont une adresse IP. Cette adresse IP leur est attribuée par un serveur DHCP (acronyme anglais de « Dynamic Host Configuration Protocol ») classiquement embarqué dans un routeur, e.g. localisé dans la passerelle.

Le serveur DHCP délivre des adresses IP aux nœuds qui en font la demande via un client DHCP, e.g. en utilisant le protocole IPv4 ou IPv6. Plus précisément, le serveur DHCP fournit un bail IP (attribution d'adresse IP) tel que défini par le document normatif RFC 1531, modifié et complété par les documents normatifs RFC 1534, RFC 2131 et RFC 2132. Un bail IP comprend généralement une adresse IP et une durée de validité. Classiquement, l'attribution d'une adresse IP se fait par diffusion par le nœud d'une requête de type DHCPDISCOVER pour localiser un serveur de type DHCP. La requête de type DHCPDISCOVER comprend l'adresse physique (ou adresse MAC) du nœud. Le serveur DHCP reçoit le message DHCPDISCOVER. En réponse, il émet une réponse de type DHCPOFFER, i.e. une offre de bail IP, qui comprend notamment l'adresse IP du serveur DHCP, ainsi que l'adresse IP qu'il propose au nœud. En général, le nœud va alors émettre un message DHCPREQUEST par lequel il sélectionne une offre de bail IP. Le message DHCPREQUEST comporte l'identification du serveur DHCP sélectionné. Le serveur DHCP sélectionné envoie un message d'acquittement DHCPACK. Les messages DHCP peuvent contenir des options DHCP qui fournissent des informations de configuration et de service spécifiques aux clients DHCP. Ces options apparaissent sous forme de champs de longueur variable à la fin des messages DHCP que les serveurs et clients DHCP échangent. Par exemple, une option peut être utilisée pour répertorier les serveurs DNS disponibles.

Chaque nœud du réseau de communication 1 est apte à mettre en œuvre des fonctionnalités spécifiques d'un service réseau en fonction notamment de son rôle (maître ou esclave) dans le réseau de communication 1. Les fonctionnalités mises en œuvre sont des fonctionnalités de relais DNS (acronyme anglais de « Domain Name System »), de relais DHCP (acronyme anglais de « Dynamic Host Configuration Protocol »), de pare-feu vis-à-vis de flux de données échangés via l'Internet au travers de la passerelle GW 110, et/ou des fonctionnalités de contrôle parental vis-à-vis de flux de données échangés via l'Internet au travers de la passerelle GW 110. Un nœud implémentant la fonctionnalité de relais DHCP peut relayer des diffusions de demande d'adresse IP de clients DHCP vers un serveur DHCP. Un nœud implémentant la fonctionnalité de relais DNS peut relayer des demandes de résolution de nom de domaine vers un serveur DNS.

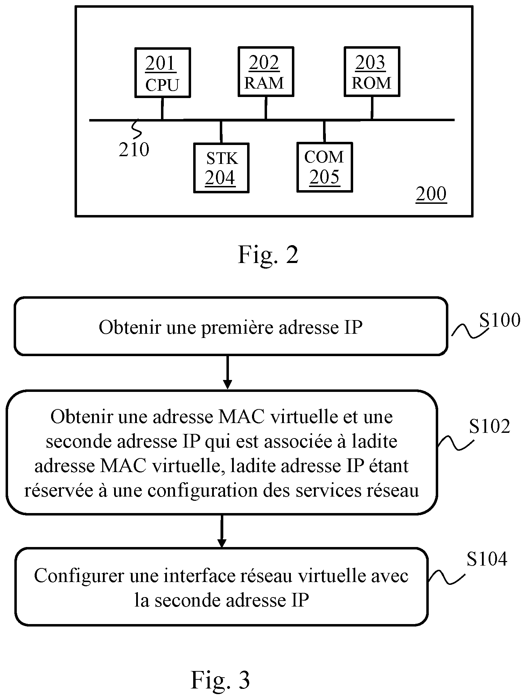

La Fig. 2 illustre schématiquement un exemple d'architecture matérielle d'un nœud 200 du réseau de communication 1 selon un mode particulier de réalisation.

Selon l'exemple d'architecture matérielle représenté à la Fig. 2, le nœud 200 comprend, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 et/ou une mémoire Flash ; une unité de stockage 204 telle qu'un disque dur ou telle qu'un lecteur de support de stockage, e.g. un lecteur de cartes SD (« Secure Digital » en anglais) ; et au moins une interface de communication COM 205. Au moins une interface de communication COM 205 permet d'implémenter la fonctionnalité de point d'accès AP.

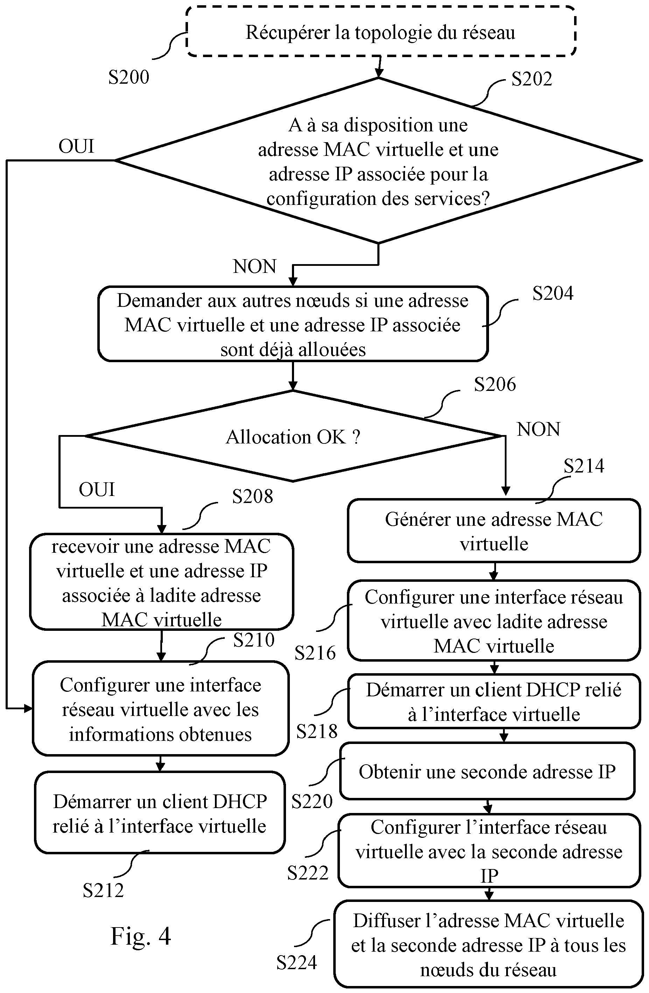

Le processeur CPU 201 est capable d'exécuter des instructions chargées dans la mémoire RAM 202 à partir de la mémoire ROM 203, d'une mémoire externe (non représentée), d'un support de stockage (tel qu'une carte SD), ou d'un réseau de communication. Lors de la mise sous tension, le processeur CPU 201 est capable de lire de la mémoire RAM 202 des instructions et de les exécuter. Ces instructions forment un programme d'ordinateur causant la mise en œuvre, par le processeur CPU 201, de tout ou partie des procédés décrits ci-après en relation avec les Figs 3 et 4.

Tout ou partie des procédés décrits en relation avec les Figs. 3 et 4 peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des procédés décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, les nœuds N1 121 à N10 130 comportent de la circuiterie électronique configurée pour implémenter tout ou partie des procédés décrits en relation avec les Figs. 3 et 4.

La Fig.3 illustre schématiquement un procédé de configuration d'un réseau de communication 1 selon l'invention. Le procédé est mis en œuvre par un nœud maître.

Lors d'une étape S100, le nœud maître obtient une première adresse IP auprès du serveur DHCP à partir de son adresse MAC de base qui est attribuée dès sa fabrication en usine. Cette adresse MAC de base qui est unique sert à identifier le nœud maître. Afin de dissocier les services réseau du nœud maître, les nœuds connectés au réseau local ne sont pas configurés avec cette première adresse IP du nœud maître contrairement à ce qui est fait dans les procédés de l'état de l'art. Par exemple, cette première adresse IP est utilisée par le nœud maître pour communiquer avec les autres nœuds via le bus de communication, e.g. pour synchroniser des paramètres Wi-Fi entre eux et/ou propager des évènements tels que les changements de topologie. Dans un autre exemple, cette première adresse IP est utilisée par le nœud maître pour ses propres besoins : accès au réseau de communication étendu 120, mise à jour de son micrologiciel de gestion, supervision distante, etc.

Lors d'une étape S102, le nœud maître obtient une adresse MAC virtuelle et une seconde adresse IP qui est associée à ladite adresse MAC virtuelle. Cette seconde adresse IP qui est différente de la première adresse IP est réservée à la configuration des services réseau. A cet effet, le nœud maître leurre le serveur DHCP en lui faisant croire que la seconde adresse IP est demandée par un dispositif différent du nœud maître ayant déjà obtenu la première adresse IP lors de l'étape S100. Pour ce faire, le nœud maître obtient une adresse MAC virtuelle qui est générée à partir de son adresse MAC de base. L'adresse MAC est dite virtuelle car il ne s'agit pas d'une adresse MAC de base identifiant un dispositif réseau dès sa fabrication en usine mais d'une adresse générée à partir d'une adresse MAC de base. Par exemple, l'adresse MAC virtuelle est obtenue en incrémentant l'adresse MAC de base d'une valeur v, e.g. v=1. Dans une variante de réalisation, l'adresse MAC virtuelle est obtenue en positionnant à une valeur prédéfinie, e.g. à la valeur 1, un bit privé de l'adresse MAC. Un tel bit privé est défini dans le document RFC 1649.

Dans un mode de réalisation particulier, le nœud maître configure une interface virtuelle avec ladite adresse MAC virtuelle et démarre un client DHCP relié à l'interface virtuelle afin d'obtenir la seconde adresse IP auprès d'un serveur DHCP. Cette interface virtuelle est configurée pour héberger les services réseau, e.g. DNS, routage, etc. Par exemple, la commande linux suivante est utilisée pour configurer cette interface virtuelle :
*ip link add link br0 name br0.service type macvlan*
où br0 est un bridge défini pour relier toutes les interfaces LAN entre elles, et br0.service est le nom de l'interface virtuelle utilisée pour héberger les services réseau. Ainsi, un lien est créé entre br0 et l'interface virtuelle br0.service. *macvlan* indique que br0.service est une interface virtuelle basée sur une adresse MAC.

L'interface virtuelle est ensuite configurée avec l'adresse MAC virtuelle, par exemple au moyen de la commande linux suivante :
*ifconfig br0.service hw ether <adresse mac virtuelle >*

Pour obtenir la seconde adresse IP, le nœud maître diffuse une requête de type DHCPDISCOVER pour localiser un serveur de type DHCP. La requête de type DHCPDISCOVER comprend l'adresse MAC virtuelle du nœud. Par exemple, l'adresse MAC virtuelle est insérée dans un champ *chaddr* de la requête. Dans une variante, l'adresse MAC virtuelle est insérée dans un champ optionnel de la requête connu sous la terminologie anglaise de *Client Identifier.* Ce champ est notamment défini dans le document normatif RFC 1541. Dans une variante de réalisation, le champ *Client Identifier* est basé sur l'adresse MAC virtuelle sans pour autant être égale à ladite adresse MAC virtuelle. Dans une autre variante de réalisation, le champ *Client Identifier* comprend le numéro de série. Le serveur DHCP reçoit le message DHCPDISCOVER. Pensant avoir à faire à un nouveau nœud dont l'adresse MAC de base est l'adresse MAC virtuelle générée, il émet une réponse de type DHCPOFFER, i.e. une offre de bail IP, qui comprend notamment l'adresse IP du serveur DHCP, ainsi que la seconde adresse IP qu'il propose au nœud maître. Cette seconde adresse IP est différente de la première adresse IP. En général, le nœud maître va alors émettre un message DHCPREQUEST par lequel il sélectionne une offre de bail IP. Le message DHCPREQUEST comporte l'identification du serveur DHCP sélectionné. Le serveur DHCP sélectionné envoie un message d'acquittement DHCPACK qui peut notamment contenir l'adresse d'un serveur DNS (acronyme anglais de « Domain Name System »).

Lors d'une étape S104, le nœud maître configure l'interface réseau virtuelle avec la seconde adresse IP. L'interface virtuelle est configurée avec la seconde adresse IP, par exemple au moyen de la commande linux suivante :
*ip addr add <seconde adresse IP> dev br0.service*

Chaque nœud du réseau de communication 1 a sa propre table de routage qui lui permet d'acheminer le trafic, en l'occurrence des trames réseau, vers leur destination.

Puis, la route du bridge br0.service est insérée dans une table de routage secondaire dont le numéro est choisi arbitrairement. Par exemple, la commande linux suivante est utilisée :
*ip route add <reseau br0.service>table 10.* Dans ce cas, la table de routage secondaire porte le numéro 10.

Des règles de routage sont ensuite insérées pour rediriger le trafic des services reçu sur un port particulier, e.g. le port 53, vers cette nouvelle table, par exemple en utilisant la commande linux suivante pour rediriger le trafic DNS : *ip rule add dport 53 table 10*
Ainsi, le nœud maître lance les services réseau sur la nouvelle interface br0.service. Les autres nœuds du réseau vont donc trouver ou retrouver l'accès à ces services réseau d'une manière automatique.

Lorsque nœud maître perd son rôle de maître (par exemple lorsque son câble réseau est débranché), il doit arrêter les services centraux sur son interface br0.service, et il doit déconfigurer son interface br0.service ainsi que les règles de routage associées.

La seconde adresse IP est une adresse IP réservée à la configuration des services réseau et est avantageusement décorrélée de la première adresse IP propre au nœud maître. Ainsi, lorsque le nœud maître n'est plus accessible, e.g. parce qu'il est déconnecté du réseau, les autres nœuds du réseau de communication 1 peuvent continuer d'utiliser les services réseau qui fonctionnent avec leur propre adresse IP, en l'occurrence avec la seconde adresse IP allouée par le serveur DHCP. Cette seconde adresse IP n'est pas liée au nœud maître et peut avantageusement être transférée à un autre nœud maître nouvellement élu. Ainsi, le nœud maître nouvellement élu est à même de continuer à offrir les services réseau aux autres nœuds du réseau et cela sans intervention d'un utilisateur.

La Fig. 4 illustre schématiquement un procédé de configuration d'un réseau de communication 1 selon l'invention. Le procédé est mis en œuvre par un nœud maître nouvellement élu, dit nouveau nœud maître, e.g. suite à une perte de connexion entre un ancien nœud maître et la passerelle.

Ce nouveau nœud maître peut être un nœud déjà présent dans le réseau de communication 1 lorsque ce dernier était coordonné par l'ancien nœud maître ou bien être un nœud nouvellement connecté au réseau de communication 1.

Lors d'une étape optionnelle S200, le nouveau nœud maître récupère la topologie du réseau de communication 1 au travers d'échanges de messages avec les autres nœuds du réseau local. Les nœuds échangent ces messages en utilisant un bus de communication, e.g. un bus P1905 ou le protocole ISM décrit dans la demande de brevet FR2984554 publiée le 21 juin 2013. Cette étape est optionnelle car dans le cas où le nouveau nœud maître était déjà connecté au réseau de communication 1 depuis un certain temps, il connaît déjà sa topologie. Dans le cas où le nouveau nœud maître n'était pas déjà connecté au réseau de communication 1, il ne connaît cette topologie et doit donc la récupérer pour pouvoir communiquer avec les autres nœuds du réseau de communication 1.

Lors d'une étape S202, le nouveau nœud maître vérifie s'il a à sa disposition une adresse MAC virtuelle et une adresse IP associée à ladite adresse MAC virtuelle et réservée à la configuration des services réseau.

Dans le cas où il a à sa disposition de telles informations, le procédé continue à l'étape S210. En effet, si le nouveau nœud maître était déjà connecté au réseau de communication 1 depuis un certain temps, il aura récupéré ces informations (adresse MAC virtuelle et adresse IP associée) lors de sa première connexion et il les a donc déjà à sa disposition.

Sinon, le procédé continue à l'étape S204.

Lors de l'étape S204, le nouveau nœud maître demande aux autres nœuds du réseau de communication 1 si une adresse MAC virtuelle et une adresse IP réservée à la configuration des services réseau sont déjà allouées sur le réseau. Par exemple, le nouveau nœud maître échange des messages sur le bus de communication avec les autres nœuds. Il peut notamment diffuser un message qui sera reçu par l'ensemble des nœuds du réseau. Dans une variante de réalisation, s'il connaît la topologie du réseau il peut envoyer un message en point à point à au moins un nœud du réseau de communication 1.

Dans le cas où une adresse MAC virtuelle et une adresse IP réservée à la configuration des services réseau sont déjà allouées sur le réseau (S206), le procédé continue à l'étape S208.

A l'étape S208, le nouveau nœud maître reçoit des autres nœuds ayant connaissance de la configuration des services, l'adresse MAC virtuelle et l'adresse IP associée. Cette adresse IP réservée à la configuration des services réseau a pu être obtenue lors d'une étape S102 par un nœud qui a été maître précédemment et qui ne l'est plus. Ainsi, cette adresse IP réservée à la configuration des services réseau n'est pas liée au nœud maître qui l'a obtenue auprès du serveur DHCP et peut être transmise à un nouveau nœud maître.

Lors d'une étape S210, le nouveau nœud maître configure une interface réseau virtuelle à partir des informations obtenues. Plus précisément, le nœud maître configure une interface réseau virtuelle possédant sa propre adresse MAC à partir des informations obtenues. Cette interface virtuelle est configurée pour héberger les services réseau, e.g. DNS, routage, etc. Par exemple, la commande linux suivante est utilisée pour configurer cette interface virtuelle :
*ip link add link br0 name br0.service type macvlan*
où br0 est un bridge défini pour relier toutes les interfaces LAN entre elles, et br0.service est le nom de l'interface virtuelle utilisée pour héberger les services réseau. Ainsi, un lien est créé entre br0 et l'interface virtuelle br0.service. *macvlan* indique que br0.service est une interface virtuelle basée sur une adresse MAC.

L'interface virtuelle est ensuite configurée avec l'adresse MAC virtuelle et la seconde adresse IP, par exemple au moyen des commandes linux suivantes :
*ifconfig br0.service hw ether <adresse mac virtuelle >*
*ip addr add <seconde adresse IP> dev br0.service*

Chaque nœud du réseau de communication 1 a sa propre table de routage qui lui permet d'acheminer le trafic, en l'occurrence des trames réseau, vers leur destination.

Puis, la route du bridge br0.service est insérée dans une table de routage secondaire dont le numéro est choisi arbitrairement. Par exemple, la commande linux suivante est utilisée :
*ip route add <reseau br0.service> table 10.* Dans ce cas, la table de routage secondaire porte le numéro 10.

Des règles de routage sont ensuite insérées pour rediriger le trafic des services reçu sur un port particulier, e.g. le port 53, vers cette nouvelle table, par exemple en utilisant la commande linux suivante pour rediriger le trafic DNS : *ip rule add dport 53 table 10*

Ainsi, le nœud maître lance les services réseau sur la nouvelle interface br0.service. Les autres nœuds du réseau vont donc trouver ou retrouver l'accès à ces services réseau d'une manière automatique. Chaque adresse IP étant allouée pour une durée limitée, le nœud maître doit pouvoir demander une prolongation du bail IP de la seconde adresse IP comme prévu par le document normatif RFC DHCP 2131. A cet effet, il démarre un client DHCP relié à l'interface virtuelle lors d'une étape S212.Par exemple, la commande linux suivante est utilisée *: dhcpclient -i br0.service.*

Dans le cas où une adresse MAC virtuelle et une adresse IP réservée à la configuration des services ne sont pas déjà allouées sur le réseau (S206), le procédé continue à l'étape S214. Lors de l'étape S214, le nouveau nœud maître obtient une adresse MAC virtuelle qui est générée à partir de son adresse MAC de base. L'adresse MAC est dite virtuelle car il ne s'agit pas d'une adresse MAC de base identifiant un dispositif réseau dès sa fabrication en usine mais d'une adresse générée à partir d'une adresse MAC de base. Par exemple, l'adresse MAC virtuelle est obtenue en incrémentant l'adresse MAC de base d'une valeur v, e.g. v=1. Dans une variante de réalisation, l'adresse MAC virtuelle est obtenue en positionnant à une valeur prédéfinie, e.g. à la valeur 1, un bit privé de l'adresse MAC. Un tel bit privé est défini dans le document RFC 1649.

Lors d'une étape S216, le nouveau nœud maître configure une interface réseau virtuelle avec ladite adresse MAC virtuelle. Cette interface virtuelle est configurée pour héberger les services réseau, e.g. DNS, routage, etc. Par exemple, la commande linux suivante est utilisée pour configurer cette interface virtuelle :
*ip link add link br0 name br0.service type macvlan*
où br0 est un bridge défini pour relier toutes les interfaces LAN entre elles, et br0.service est le nom de l'interface virtuelle utilisée pour héberger les services réseau. Ainsi, un lien est créé entre br0 et l'interface virtuelle br0.service. *macvlan* indique que br0.service est une interface virtuelle basée sur une adresse MAC.

L'interface virtuelle est ensuite configurée avec l'adresse MAC virtuelle, par exemple au moyen de la commande linux suivante :
*ifconfig br0.service hw ether <adresse mac virtuelle >*

Lors d'une étape S218, le nouveau nœud maître démarre un client DHCP relié à l'interface virtuelle. Par exemple, la commande linux suivante est utilisée *: dhcpclient -i br0.service.* Lors d'une étape S220, le nouveau nœud maître obtient, grâce au client DHCP, une seconde adresse IP qui est associée à ladite adresse MAC virtuelle, ladite adresse IP étant réservée à une configuration des services réseau. Pour obtenir la seconde adresse IP, le nœud maître diffuse une requête de type DHCPDISCOVER pour localiser un serveur de type DHCP. La requête de type DHCPDISCOVER comprend l'adresse MAC virtuelle du nœud. Par exemple, l'adresse MAC virtuelle est insérée dans un champ *chaddr* de la requête. Dans une variante, l'adresse MAC virtuelle est insérée dans un champ optionnel de la requête connu sous la terminologie anglaise de *Client Identifier.* Ce champ est notamment défini dans le document normatif RFC 1541. Dans une variante de réalisation, le champ *Client Identifier* est basé sur l'adresse MAC virtuelle sans pour autant être égale à ladite adresse MAC virtuelle. Dans une autre variante de réalisation, le champ *Client Identifier* comprend le numéro de série. Le serveur DHCP reçoit le message DHCPDISCOVER. Pensant avoir à faire à un nouveau nœud dont l'adresse MAC de base est l'adresse MAC virtuelle générée, il émet une réponse de type DHCPOFFER, i.e. une offre de bail IP, qui comprend notamment l'adresse IP du serveur DHCP, ainsi que la seconde adresse IP qu'il propose au nœud maître. Cette seconde adresse IP est différente de la première adresse IP. En général, le nœud maître va alors émettre un message DHCPREQUEST par lequel il sélectionne une offre de bail IP. Le message DHCPREQUEST comporte l'identification du serveur DHCP sélectionné. Le serveur DHCP sélectionné envoie un message d'acquittement DHCPACK qui peut notamment contenir l'adresse d'un serveur DNS (acronyme anglais de « Domain Name System »).

Lors d'une étape S222, le nouveau nœud maître configure l'interface virtuelle avec la seconde adresse IP, par exemple au moyen de la commande linux suivante :
*ip addr add <seconde adresse IP> dev br0.service*

Chaque nœud du réseau de communication 1 a sa propre table de routage qui lui permet d'acheminer le trafic, en l'occurrence des trames réseau, vers leur destination.

Puis, la route du bridge br0.service est insérée dans une table de routage secondaire dont le numéro est choisi arbitrairement. Par exemple, la commande linux suivante est utilisée :
*ip route add <reseau br0.service> table 10.* Dans ce cas, la table de routage secondaire porte le numéro 10.

Des règles de routage sont ensuite insérées pour rediriger le trafic des services reçu sur un port particulier, e.g. le port 53, vers cette nouvelle table, par exemple en utilisant la commande linux suivante pour rediriger le trafic DNS : *ip rule add dport 53 table 10*
Ainsi, le nœud maître lance les services réseau sur la nouvelle interface br0.service. Les autres nœuds du réseau vont donc trouver ou retrouver l'accès à ces services réseau d'une manière automatique.

Lors d'une étape S224, le nouveau nœud maître diffuse l'adresse MAC virtuelle ainsi que la seconde adresse IP à tous les autres nœuds du réseau de communication 1, y compris les terminaux. Dans une variante de réalisation, l'adresse MAC virtuelle, la seconde adresse IP associée, ainsi que la valeur du champ *Client Identifier* si elle est différente de l'adresse MAC virtuelle, sont diffusées par le nœud maître à tous les autres nœuds du réseau de communication 1. Cette étape correspond à l'étape S104 de la Fig.3

## Revendications

1. Un procédé de configuration d'un réseau de communication comportant une passerelle adaptée à interconnecter ledit réseau de communication à un réseau de communication étendu, ladite passerelle étant reliée à une pluralité de nœuds implémentant une fonctionnalité de point d'accès à un réseau de communication local sans fil, ladite pluralité de nœuds comprenant un nœud maître courant sélectionné parmi ladite pluralité de nœuds, ledit nœud maître courant étant configuré pour définir la configuration du réseau de communication , ledit procédé comprenant les étapes suivantes mises en œuvre par ledit nœud maître courant :
- obtenir (S100) une première adresse IP associée à une adresse MAC de base dudit nœud maître courant,
- obtenir (S102, S208, S220) une adresse MAC virtuelle et une deuxième adresse IP associée à ladite adresse MAC virtuelle, ladite deuxième adresse IP étant réservée à une configuration de services réseau et étant différente et décorrélée de ladite première adresse IP ; et
- configurer (S104, S210, S222) une interface réseau virtuelle configurée pour héberger lesdits services réseau avec ladite deuxième adresse IP associée à ladite adresse MAC virtuelle ;
**et caractérisé en ce que** l'étape d'obtenir une adresse MAC virtuelle et une deuxième adresse IP associée à ladite adresse MAC virtuelle comprend :
- lorsque le nœud maître courant est un nœud maître nouvellement élu et lorsqu'en outre l'adresse MAC virtuelle et la deuxième adresse IP associée sont déjà allouées sur le réseau de communication :
∘ obtenir ladite adresse MAC virtuelle et la deuxième adresse IP associée à ladite adresse MAC virtuelle depuis ledit nœud maître courant (S202), si lesdites adresse MAC virtuelle et deuxième adresse IP associée sont déjà à disposition dudit nœud maître courant, ou,
∘ recevoir ladite adresse MAC virtuelle et la deuxième adresse IP associée depuis un autre nœud du réseau de communication sinon (S208).

2. Le procédé selon la revendication 1, dans lequel obtenir une adresse MAC virtuelle et une deuxième adresse IP associée à ladite adresse MAC virtuelle comprend :
- lorsque le nœud maître courant est un nœud maître nouvellement élu et lorsqu'en outre l'adresse MAC virtuelle et la deuxième adresse IP associée ne sont pas allouées sur le réseau de communication :
∘ générer (S214) une adresse MAC virtuelle à partir de ladite adresse MAC de base dudit nœud maître courant ;
∘ configurer (S216) l'interface réseau virtuelle avec ladite adresse MAC virtuelle ;
∘ démarrer (S218) un client DHCP relié à l'interface réseau virtuelle ;
∘ obtenir (S220), par le client DHCP, une adresse IP auprès d'un serveur DHCP, ladite adresse IP obtenue étant la deuxième adresse IP réservée à la configuration des services réseau.

3. Le procédé selon la revendication 2, dans lequel la valeur de ladite adresse MAC virtuelle est égale à la valeur de ladite adresse MAC de base dudit nœud maître courant incrémenté de v, v étant un entier positif.

4. Le procédé selon la revendication 1, dans lequel, lorsque l'adresse MAC virtuelle et la deuxième adresse IP associée sont reçues depuis un autre nœud du réseau de communication, la deuxième adresse IP reçue depuis l'autre nœud du réseau de communication a été obtenue auprès d'un serveur DHCP par un autre nœud maître différent dudit nœud maître courant à partir d'une adresse MAC virtuelle, et ladite adresse MAC virtuelle reçue depuis ledit autre nœud du réseau de communication a été générée à partir d'une adresse MAC de base dudit autre nœud maître,
et dans lequel configurer une interface réseau virtuelle avec la deuxième adresse IP associée à ladite adresse MAC virtuelle comprend :
- configurer (S210) ladite interface réseau virtuelle avec ladite adresse MAC virtuelle et avec la deuxième adresse IP associée à ladite adresse MAC virtuelle et
- démarrer (S212) un client DHCP relié à l'interface réseau virtuelle.

5. Le procédé selon l'une des revendications 1 à 4, dans lequel configurer une interface réseau virtuelle avec la deuxième adresse IP associée comprend créer une table de routage secondaire et utiliser ladite table de routage secondaire pour rediriger le trafic des services réseau reçu.

6. Un nœud maître d'un réseau de communication comportant une passerelle adaptée à interconnecter ledit réseau de communication à un réseau de communication étendu, ladite passerelle étant reliée à une pluralité de nœuds implémentant une fonctionnalité de point d'accès à un réseau de communication local sans fil, ladite pluralité de nœuds comprenant un nœud maître courant sélectionné parmi ladite pluralité de nœuds, ledit nœud maître courant étant configuré pour définir la configuration du réseau de communication , ledit nœud maître comprenant de la circuiterie électronique configurée pour :
- obtenir une première adresse IP associée à une adresse MAC de base dudit nœud maître courant,
- obtenir une adresse MAC virtuelle et une deuxième adresse IP associée à ladite adresse MAC virtuelle, ladite deuxième adresse IP étant réservée à une configuration de services réseau et étant différente et décorrélée de ladite première adresse IP ; et
- configurer une interface réseau virtuelle configurée pour héberger lesdits services réseau avec a deuxième adresse IP associée à ladite adresse MAC virtuelle ;
et **caractérisé en ce que** l'étape d'obtenir ladite adresse MAC virtuelle et la deuxième adresse IP associée à ladite adresse MAC virtuelle comprenant :
- lorsque le nœud maître courant est un nœud maître nouvellement élu et lorsqu'en outre l'adresse MAC virtuelle et la deuxième adresse IP associée sont déjà allouées sur le réseau de communication :
∘ obtenir ladite adresse MAC virtuelle et la deuxième adresse IP associée à ladite adresse MAC virtuelle courant depuis le nœud maître courant (S202), si lesdites adresse MAC virtuelle et deuxième adresse IP associée sont déjà à disposition du nœud maître courant, ou
∘ recevoir ladite adresse MAC virtuelle et la deuxième adresse IP associée à ladite adresse MAC virtuelle depuis un autre nœud du réseau de communication sinon (S208) .

7. Un produit programme d'ordinateur **caractérisé en ce qu'**il comprend des instructions pour mettre en œuvre le procédé de configuration selon l'une quelconque des revendications 1 à 5, lorsque ledit programme est exécuté par un processeur.

8. Un support de stockage **caractérisé en ce qu'**il stocke un programme d'ordinateur comprenant des instructions pour mettre en œuvre le procédé de configuration selon l'une quelconque des revendications 1 à 5, lorsque ledit programme est exécuté par un processeur.

## Patentansprüche

1. Verfahren zur Konfiguration eines Kommunikationsnetzes, das ein Gateway umfasst, das geeignet ist, das Kommunikationsnetz mit einem Weitverkehrskommunikationsnetz zu vernetzen, wobei das Gateway mit einer Vielzahl von Knoten verbunden ist, die eine Funktionalität eines Zugangspunkts zu einem drahtlosen lokalen Kommunikationsnetz implementieren, wobei die Vielzahl von Knoten einen aktuellen Master-Knoten umfasst, der unter der Vielzahl von Knoten ausgewählt ist, wobei der aktuelle Master-Knoten dazu konfiguriert ist, die Konfiguration des Kommunikationsnetzes zu definieren, wobei das Verfahren die folgenden von dem aktuellen Master-Knoten ausgeführten Schritte umfasst:
- Erhalten (S100) einer ersten IP-Adresse, die einer Basis-MAC-Adresse des aktuellen Master-Knotens zugeordnet ist,
- Erhalten (S102, S208, S220) einer virtuellen MAC-Adresse und einer der virtuellen MAC-Adresse zugeordneten zweiten IP-Adresse, wobei die zweite IP-Adresse für eine Netzdienstekonfiguration reserviert ist und von der ersten IP-Adresse verschieden und dekorreliert ist; und
- Konfigurieren (S104, S210, S222) einer virtuellen Netzschnittstelle, die dazu konfiguriert ist, die Netzdienste mit der der virtuellen MAC-Adresse zugeordneten zweiten IP-Adresse zu beherbergen;
und **dadurch gekennzeichnet, dass** der Schritt des Erhaltens einer virtuellen MAC-Adresse und einer der virtuellen MAC-Adresse zugeordneten zweiten IP-Adresse umfasst:
- wenn der aktuelle Master-Knoten ein neu gewählter Master-Knoten ist und wenn ferner die virtuelle MAC-Adresse und die zugeordnete zweite IP-Adresse in dem Kommunikationsnetz bereits vergeben sind:
∘ Erhalten der virtuellen MAC-Adresse und der der virtuellen MAC-Adresse zugeordneten zweiten IP-Adresse von dem aktuellen Master-Knoten (S202) aus, wenn die virtuelle MAC-Adresse und die zugeordnete zweite IP-Adresse dem aktuellen Master-Knoten bereits zur Verfügung stehen, oder,
∘ anderenfalls Empfangen der virtuellen MAC-Adresse und der zugeordneten zweiten IP-Adresse von einem anderen Knoten des Kommunikationsnetzes aus (S208).

2. Verfahren nach Anspruch 1, wobei das Erhalten einer virtuellen MAC-Adresse und einer der virtuellen MAC-Adresse zugeordneten zweiten IP-Adresse umfasst:
- wenn der aktuelle Master-Knoten ein neu gewählter Master-Knoten ist und wenn ferner die virtuelle MAC-Adresse und die zugeordnete zweite IP-Adresse in dem Kommunikationsnetz nicht vergeben sind:
∘ Generieren (S214) einer virtuellen MAC-Adresse ausgehend von der Basis-MAC-Adresse des aktuellen Master-Knotens;
∘ Konfigurieren (S216) der virtuellen Netzschnittstelle mit der virtuellen MAC-Adresse;
∘ Starten (S218) eines DHCP-Clients, der mit der virtuellen Netzschnittstelle verbunden ist;
∘ Erhalten (S220), durch den DHCP-Client, einer IP-Adresse bei einem DHCP-Server, wobei die erhaltene IP-Adresse die für die Netzdienstekonfiguration reservierte zweite IP-Adresse ist.

3. Verfahren nach Anspruch 2, wobei der Wert der virtuellen MAC-Adresse gleich dem Wert der Basis-MAC-Adresse des aktuellen Master-Knotens zuzüglich von v ist, wobei v eine positive ganze Zahl ist.

4. Verfahren nach Anspruch 1, wobei, wenn die virtuelle MAC-Adresse und die zugeordnete zweite IP-Adresse von einem anderen Knoten des Kommunikationsnetzes aus empfangen werden, die von dem anderen Knoten des Kommunikationsnetzes aus empfangene zweite IP-Adresse bei einem DHCP-Server durch einen anderen Master-Knoten, der von dem aktuellen Master-Knoten verschieden ist, ausgehend von einer virtuellen MAC-Adresse erhalten worden ist und die von dem anderen Knoten des Kommunikationsnetzes aus empfangene virtuelle MAC-Adresse ausgehend von einer Basis-MAC-Adresse des anderen Master-Knotens generiert worden ist,
und wobei das Konfigurieren einer virtuellen Netzschnittstelle mit der der virtuellen MAC-Adresse zugeordneten zweiten IP-Adresse umfasst:
- Konfigurieren (S210) der virtuellen Netzschnittstelle mit der virtuellen MAC-Adresse und mit der der virtuellen MAC-Adresse zugeordneten zweiten IP-Adresse und
- Starten (S212) eines DHCP-Clients, der mit der virtuellen Netzschnittstelle verbunden ist.

5. Verfahren nach einem der Ansprüche 1 bis 4, wobei das Konfigurieren einer virtuellen Netzschnittstelle mit der zugeordneten zweiten IP-Adresse das Erstellen einer sekundären Routingtabelle und das Verwenden dieser sekundären Routingtabelle zum Umleiten des empfangenen Verkehrs der Netzdienste umfasst.

6. Master-Knoten eines Kommunikationsnetzes, das ein Gateway umfasst, das geeignet ist, das Kommunikationsnetz mit einem Weitverkehrskommunikationsnetz zu vernetzen, wobei das Gateway mit einer Vielzahl von Knoten verbunden ist, die eine Funktionalität eines Zugangspunkts zu einem drahtlosen lokalen Kommunikationsnetz implementieren, wobei die Vielzahl von Knoten einen aktuellen Master-Knoten umfasst, der unter der Vielzahl von Knoten ausgewählt ist, wobei der aktuelle Master-Knoten dazu konfiguriert ist, die Konfiguration des Kommunikationsnetzes zu definieren, wobei der Master-Knoten eine elektronische Schaltungsanordnung umfasst, die konfiguriert ist zum:
- Erhalten einer ersten IP-Adresse, die einer Basis-MAC-Adresse des aktuellen Master-Knotens zugeordnet ist,
- Erhalten einer virtuellen MAC-Adresse und einer der virtuellen MAC-Adresse zugeordneten zweiten IP-Adresse, wobei die zweite IP-Adresse für eine Netzdienstekonfiguration reserviert ist und von der ersten IP-Adresse verschieden und dekorreliert ist; und
- Konfigurieren einer virtuellen Netzschnittstelle, die dazu konfiguriert ist, die Netzdienste mit der der virtuellen MAC-Adresse zugeordneten zweiten IP-Adresse zu beherbergen;
und **dadurch gekennzeichnet, dass** der Schritt des Erhaltens der virtuellen MAC-Adresse und der der virtuellen MAC-Adresse zugeordneten zweiten IP-Adresse umfasst:
- wenn der aktuelle Master-Knoten ein neu gewählter Master-Knoten ist und wenn ferner die virtuelle MAC-Adresse und die zugeordnete zweite IP-Adresse in dem Kommunikationsnetz bereits vergeben sind:
∘ Erhalten der virtuellen MAC-Adresse und der der aktuellen virtuellen MAC-Adresse zugeordneten zweiten IP-Adresse von dem aktuellen Master-Knoten (S202) aus, wenn die virtuelle MAC-Adresse und die zugeordnete zweite IP-Adresse dem aktuellen Master-Knoten bereits zur Verfügung stehen, oder
∘ anderenfalls Empfangen der virtuellen MAC-Adresse und der der virtuellen MAC-Adresse zugeordneten zweiten IP-Adresse von einem anderen Knoten des Kommunikationsnetzes aus (S208).

7. Computerprogrammprodukt, **dadurch gekennzeichnet, dass** es Anweisungen umfasst, die bei der Ausführung des Programms durch einen Prozessor das Verfahren zur Konfiguration nach einem der Ansprüche 1 bis 5 ausführen.

8. Speichermedium, **dadurch gekennzeichnet, dass** es ein Computerprogramm speichert, das Anweisungen umfasst, die bei der Ausführung des Programms durch einen Prozessor das Verfahren zur Konfiguration nach einem der Ansprüche 1 bis 5 ausführen.

## Claims

1. A method for configuring a communication network comprising a gateway adapted for connecting said communication network to a wide area communication network, said gateway being connected to a plurality of nodes implementing an access point functionality to a wireless local communication network, said plurality of nodes comprising a current master node selected from said plurality of nodes, said current master node being configured to define the configuration of the communication network, said method comprising the following steps implemented by said current master node:
- obtaining (S100) a first IP address associated with a base MAC address of said current master node,
- obtaining (S102, S208, S220) a virtual MAC address and a second IP address associated with said virtual MAC address, said second IP address being reserved for a configuration of network services and being different from and decorrelated from said first IP address; and
- configuring (S104, S210, S222) a virtual network interface configured to host said network services with said second IP address associated with said virtual MAC address;
and **characterised in that** the step of obtaining a virtual MAC address and a second IP address associated with said virtual MAC address comprises:
- when the current master node is a newly elected master node and when furthermore the virtual MAC address and the associated second IP address are already allocated on the communication network:
∘ obtaining said virtual MAC address and the second IP address associated with said virtual MAC address from said current master node (S202), if said virtual MAC address and associated second IP address are already available to said current master node, or
∘ receiving said virtual MAC address and the associated second IP address from another node of the communication network otherwise (S208).

2. The method according to claim 1, wherein obtaining a virtual MAC address and a second IP address associated with said virtual MAC address comprises:
- when the current master node is a newly elected master node and when furthermore the virtual MAC address and the associated second IP address are not allocated on the communication network:
∘ generating (S214) a virtual MAC address from said base MAC address of said current master node;
∘ configuring (S216) the virtual network interface with said virtual MAC address;
∘ starting up (S218) a DHCP client connected to the virtual interface;
∘ obtaining (S220), by the DHCP client, an IP address from a DHCP server, said IP address obtained being the second IP address reserved for the configuration of the network services.

3. The method according to claim 2, wherein the value of said virtual MAC address is equal to the value of said base MAC address of said current master node incremented by v, v being a positive integer.

4. The method according to claim 1, wherein, when the virtual MAC address and the associated second IP address are received from another node of the communication network, the second IP address received from the other node of the communication network was obtained, from a DHCP server, by another master node different from said current master node from a virtual MAC address, and said virtual MAC address received from said other node of the communication network was generated from a base MAC address of said other master node,
and wherein configuring a virtual network interface with the second IP address associated with said virtual MAC address comprises:
- configuring (S210) said virtual network interface with said virtual MAC address and with the second IP address associated with said virtual MAC address and
- starting up (S212) a DHCP client connected to the virtual interface.

5. The method according to one of claims 1 to 4, wherein configuring a virtual network interface with the associated second IP address comprises creating a secondary routing table and using said secondary routing table for redirecting the traffic of the network services received.

6. A master node of a communication network comprising a gateway adapted for connecting the communication network to a wide area communication network, said gateway being connected to a plurality of nodes implementing an access point functionality to a wireless local communication network, said plurality of nodes comprising a current master node selected from said plurality of nodes, said current master node being configured to define the configuration of the communication network, said master node comprising electronic circuitry configured to:
- obtain a first IP address associated with a base MAC address of said current master node,
- obtain a virtual MAC address and a second IP address associated with said virtual MAC address, said second IP address being reserved for a configuration of network services and being different from and decorrelated from said first IP address; and
- configure a virtual network interface configured to host said network services with a second IP address associated with said virtual MAC address;
and **characterised in that** the step of obtaining a virtual MAC address and the second IP address associated with said virtual MAC address comprising:
- when the current master node is a newly elected master node and when furthermore the virtual MAC address and the associated second IP address are already allocated on the communication network:
∘ obtaining said virtual MAC address and the second IP address associated with said virtual MAC address from said current master node (S202), if said virtual MAC address and associated second IP address are already available to said current master node, or
∘ receiving said virtual MAC address and the associated second IP from another node of the communication network otherwise (S208).

7. A computer program product **characterised in that** it comprises instructions for implementing the configuration method according to any one of claims 1 to 5, when said program is executed by a processor.

8. A storage medium **characterised in that** it stores a computer program comprising instructions for implementing the configuration method according to any one of claims 1 to 5, when said program is executed by a processor.
